# EUROPEAN PATENT SPECIFICATION

(11) **EP 4 180 947 B1**
(45) Date of publication and mention of the grant of the patent: **30.10.2024**
(21) Application number: 20946705.9
(22) Date of filing: 30.07.2020
(51) Int. Cl.: G06F 8/65, G06F 11/14, G06F 11/18, G06F 11/20, G07C 13/00, H04W 4/44, H04W 84/20, H04L 41/00, H04L 67/00, H04L 41/082, H04L 43/10, H04L 69/40, H04W 4/50

(54) **SOFTWARE UPGRADING METHOD, APPARATUS, AND SYSTEM**
VERFAHREN, VORRICHTUNG UND SYSTEM ZUR SOFTWAREAKTUALISIERUNG
PROCÉDÉ, APPAREIL ET SYSTÈME DE MISE À NIVEAU DE LOGICIEL

(43) Date of publication of application: 17.05.2023
(73) Proprietor: Huawei Technologies Co., Ltd., Shenzhen, Guangdong 518129 (CN)
(72) Inventor: MA, Tao, Shenzhen, Guangdong 518129 (CN)
(74) Representative: Pfenning, Meinig & Partner mbB
(86) International application number: PCT/CN2020/105723
(87) International publication number: WO 2022/021191

(56) References cited:
- WO-A1-2019/182509
- WO-A1-2020/003515
- CN-A- 108 616 566
- CN-A- 109 428 740
- CN-A- 109 541 987
- US-A1- 2008 137 528

## Description

### TECHNICAL FIELD

This application relates to the field of information technologies, and in particular, to a software update method, apparatus, and system, especially, a software update method and apparatus of an electronic device that is installed in a smart transport means such as a smart car (smart/intelligent car).

### BACKGROUND

With development of information technologies, more electronic control units (Electronic Control Unit) are configured in a smart transport means such as a smart car. The ECU completes a specific control or calculation function by using software. Software update of the electronic control unit becomes a problem that needs to be resolved for development of the smart car.

In a conventional vehicle software update process, professional personnel of a repair factory usually needs to refresh and write relevant code or data on an ECU in a vehicle. The whole update process is time-consuming and energy-consuming.

With development of intelligent connected vehicles, more vehicles have a network connection function. A new vehicle software update manner, that is, an over the air (Over the Air, OTA) manner appears. The OTA manner means completing updating or upgrading vehicle software by using an air communications interface, for example, a wireless local area network, a cellular network, or a satellite. Because OTA update no longer relies on fixed locations or fixed lines, the OTA update has flexibility and convenience that a conventional vehicle software update mode does not possess. For automobile manufacturers, OTA is an important function and service of vehicles to repair software bugs, change man-machine interaction interfaces, add new functions, and the like. This helps reduce the recall costs, quickly respond to requirements, and improve user experience.

The OTA update relates to software update of a plurality of ECUs. Generally, there is certain dependency between these times of update. Therefore, whole vehicle OTA update usually requires a centralized whole vehicle update control module to coordinate the software update of the plurality of ECUs. The whole vehicle update control module is referred to as a master update control node (Update Control Master). A slave update control node (Update Control Slave) is configured on each ECU. Therefore, the Update Control Master controls and coordinates the Update Control Slave on the ECU that needs to be updated, to complete the whole vehicle software update.

It can be learned from this that, in an OTA process, the master update control node plays a key role. If the master update control node becomes faulty and cannot work normally, the OTA cannot proceed smoothly.

For this, currently, a backup technology is usually used to improve reliability of the whole vehicle update control module. In other words, a backup master update control node (Update Control Master Backup) is deployed on an ECU as a backup of the Update Control Master.

Therefore, when the Update Control Master is faulty, the Update Control Master Backup replaces the Update Control Master, and continues to control a whole vehicle software update process.

However, when the Update Control Master and the Update Control Master Backup are both faulty, the OTA still cannot proceed.

For this, a plurality of Update Control Master Backups may be configured. In this case, if the Update Control Master is faulty, the plurality of Update Control Master Backups may replace the Update Control Master to control the whole vehicle software update process. This may lead to repeated downloading or repeated installation of a software update package, resulting in waste of resources. What's worse, the following case may occur: An unpredictable risk occurs in the OTA process because the Update Control Slave receives different control information from the plurality of Update Control Master Backups, even resulting in an update failure.

WO 2019/182509 A1 discloses a network architecture for updating control units in a remote network such as in a vehicle comprises an administration module, a verification module and an agent module. The administration module formulates a policy for governing the update of control units based on context information about the control units provided to the administration module.

### SUMMARY

The present invention is set out in the appended set of claims. This application provides a software update method and apparatus, and an electronic system that can be used to improve software update reliability and efficiency. In particular, OTA update reliability and efficiency are extremely important for a smart transport means such as a smart car.

According to a first aspect, a software update method is provided and is applied to an electronic system. The electronic system includes a plurality of electronic control units ECUs, a plurality of slave update control nodes, a master update control node, and at least two candidate control nodes. Each of the plurality of slave update control nodes corresponds to at least one ECU. Each slave update control node is configured to control software update of a corresponding ECU. The master update control node is configured to control the slave update control nodes. The method includes: A first candidate control node sends at least one piece of first voting information. Each piece of first voting information includes an identifier of one candidate control node. The first candidate control node receives at least one piece of second voting information. Each piece of second voting information includes an identifier of one candidate control node. Each of a plurality of pieces of voting information that includes the first voting information and the second voting information is used to request a candidate control node indicated by an identifier included in the voting information to replace the master update control node to control the slave update control nodes. The first candidate control node determines, based on the identifier that is of the candidate control node and that is included in the second voting information, the candidate control node that replaces the master update control node to control the slave update control nodes.

In this solution of this application, a plurality of candidate control nodes are configured in the electronic system. When the master update control node is faulty, the candidate control nodes initiate voting with each other. In this way, each candidate control node can count a quantity of votes obtained by the candidate control node, and notify another candidate control node of result information when the quantity of votes is greater than or equal to a preset threshold. Therefore, a candidate control node receiving the result information may determine that there is a candidate control node that already replaces the master update control node. In this way, the following case can be avoided: When only one backup node is configured, software update cannot proceed if the backup node and the master update control node are both faulty. In addition, a case in which a plurality of Update Control Master Backups all replace an Update Control Master can be avoided, thereby improving software update reliability and efficiency, especially for a smart transport means such as a smart car using OTA.

In an example instead of limitation, the following manner of determining, based on the voting information, the candidate control node that replaces the master update control node may be enumerated.

For example, that the first candidate control node determines, based on the identifier that is of the candidate control node and that is included in the second voting information, the candidate control node that replaces the master update control node to control the slave update control nodes includes: when a quantity of pieces of voting information that includes an identifier of the first candidate control node in the second voting information is greater than or equal to a first threshold, determining that the first candidate control node replaces the master update control node, where the first threshold is determined based on a quantity of candidate control nodes.

The method further includes: The first candidate control node sends first result information. The first result information includes the identifier of the first candidate control node. The first result information is used to indicate that the first candidate control node replaces the master update control node.

For another example, that the first candidate control node determines, based on the identifier that is of the candidate control node and that is included in the second voting information, the candidate control node that replaces the master update control node to control the slave update control nodes includes: when the first candidate control node receives second result information, determining that the second candidate control node replaces the master update control node. The second result information includes an identifier of the second candidate control node. The second result information is used to indicate that the second candidate control node replaces the master update control node. The second result information is sent when a quantity of pieces of voting information that includes the identifier of the second candidate control node and that is received by the second candidate control node is greater than or equal to the first threshold. The first threshold is determined based on the quantity of candidate control nodes.

In an implementation, the first voting information may include voting information actively sent by the first candidate control node.

In other words, that a first candidate control node sends at least one piece of first voting information includes:

When detecting that the master update control node is faulty, the first candidate control node sends the first voting information to each candidate control node other than the first candidate control node in the at least two candidate control nodes. The first voting information includes the identifier of the first candidate control node.

In an example instead of limitation, fault detection may be performed in the following enumerated manners:

In other words, the method further includes: The first candidate control node sends probe information to the master update control node and starts a timer; and when no response information for the probe information is received before the timer expires, determines that the master update control node is faulty.

In another implementation, the first voting information may include voting information passively sent by the first candidate control node.

Therefore, a case in which the candidate control node cannot participate in the voting because the candidate control node fails to detect in time that the master update control node is faulty can be avoided, to further improve reliability of this application.

For example, that the first candidate control node receives at least one piece of second voting information includes: The first candidate control node receives the second voting information from a third candidate control node. The second voting information includes an identifier of the third candidate control node. That a first candidate control node sends at least one piece of first voting information includes: The first candidate control node sends the first voting information to the third candidate control node. An identifier included in the first voting information is determined based on a value relationship between a first value and a second value. The first value is a value corresponding to the identifier of the first candidate control node. The second value is a value corresponding to the identifier of the third candidate control node.

The first candidate control node selects a voting object based on a comparison result between an identifier carried in received voting information and the identifier of the first candidate control node. The selection process can be easily implemented, thereby further improving efficiency of this application and reducing an update delay.

For another example, that the first candidate control node receives at least one piece of second voting information includes: The first candidate control node receives the second voting information from a fourth candidate control node. The second voting information includes an identifier of the fourth candidate control node and information about an available resource of the fourth candidate control node. That a first candidate control node sends first voting information includes: The first candidate control node sends the first voting information to the fourth candidate control node. An identifier included in the first voting information is determined based on a value relationship between a third value and a fourth value. The third value is a value of an available resource of the first candidate control node. The fourth value is a value of an available resource of the first candidate control node.

The first candidate control node selects a voting object based on a comparison result between a size of an available resource of a candidate control node indicated by an identifier carried in received voting information and a size of an available resource of the first candidate control node, thereby improving an update control success rate of the selected candidate control node used to replace the master update control node and further improving reliability of this application.

Optionally, the first voting information further includes information about the available resource of the first candidate control node.

Optionally, the first threshold is greater than or equal to one half of the quantity of candidate control nodes.

The first threshold is set to be greater than or equal to one half of the quantity of candidate control nodes, to lower a risk that the plurality of candidate nodes all meet a condition for replacing the master update control node, thereby further improving reliability and practicality of this application.

Optionally, the candidate control node is configured in the slave update control node, or the candidate control node is the slave update control node.

Optionally, the candidate control node is configured in the ECU.

Optionally, the electronic system is configured in a smart car.

According to a second aspect, a software update apparatus is provided and is configured in an electronic system. The electronic system includes a plurality of electronic control units ECUs, a plurality of slave update control nodes, a master update control node, and at least two candidate control nodes. Each of the plurality of slave update control nodes corresponds to at least one ECU. Each slave update control node is configured to control software update of a corresponding ECU. The master update control node is configured to control the slave update control nodes. The apparatus includes a transceiver unit and a processing unit. The transceiver unit is configured to send at least one piece of first voting information. Each piece of first voting information includes an identifier of one candidate control node. The transceiver unit is further configured to receive at least one piece of second voting information. Each piece of second voting information includes an identifier of one candidate control node. Each of a plurality of pieces of voting information that includes the first voting information and the second voting information is used to request a candidate control node indicated by an identifier included in the voting information to replace the master update control node to control the slave update control nodes. The processing unit is configured to determine, based on the identifier that is of the candidate control node and that is included in the second voting information, the candidate control node that replaces the master update control node to control the slave update control nodes.

In an implementation, the processing unit is specifically configured to: when a quantity of pieces of voting information that includes an identifier of a first candidate control node in the second voting information is greater than or equal to a first threshold, determine that the first candidate control node replaces the master update control node. The first threshold is determined based on a quantity of candidate control nodes.

Optionally, the transceiver unit is further configured to send first result information. The first result information includes the identifier of the first candidate control node. The first result information is used to indicate that the first candidate control node replaces the master update control node.

In another implementation, the processing unit is specifically configured to: when the transceiver unit receives second result information, determine that a second candidate control node replaces the master update control node. The second result information includes an identifier of the second candidate control node. The second result information is used to indicate that the second candidate control node replaces the master update control node. The second result information is sent when a quantity of pieces of voting information that includes the identifier of the second candidate control node and that is received by the second candidate control node is greater than or equal to the first threshold. The first threshold is determined based on the quantity of candidate control nodes.

Optionally, the processing unit is further configured to: when detecting that the master update control node is faulty, control the transceiver unit to send the second voting information to each candidate control node other than the first candidate control node in the at least two candidate control nodes. The first identifier includes the identifier of the first candidate control node.

Optionally, the transceiver unit is further configured to send probe information to the master update control node.

The processing unit is configured to: start a timer after the transceiver unit sends the probe information; and when the transceiver unit receives no response information for the probe information before the timer expires, determine that the master update control node is faulty.

Optionally, the transceiver unit is specifically configured to receive the second voting information from a third candidate control node, where the second voting information includes an identifier of the third candidate control node; and is specifically configured to send the first voting information to the third candidate control node. An identifier included in the first voting information is determined based on a value relationship between a first value and a second value. The first value is a value corresponding to the identifier of the first candidate control node. The second value is a value corresponding to the identifier of the third candidate control node.

Optionally, the transceiver unit is specifically configured to receive the second voting information from a fourth candidate control node, where the second voting information further includes information about an available resource of the third candidate control node; and is specifically configured to send the first voting information to the fourth candidate control node. An identifier included in the first voting information is determined based on a value relationship between a third value and a fourth value. The third value is a value of the available resource of the first candidate control node. The fourth value is a value of the available resource of the first candidate control node.

Optionally, the first voting information further includes information about the available resource of the first candidate control node.

Optionally, the first threshold is greater than or equal to one half of the quantity of candidate control nodes.

Optionally, the apparatus is configured in the slave update control node, or the apparatus is the slave update control node.

Optionally, the apparatus is configured in the ECU.

Optionally, the electronic system is configured in a smart car.

According to a third aspect, an electronic system is provided, including: a plurality of electronic control units ECUs, a plurality of slave update control nodes, a master update control node, and at least two candidate control nodes. Each slave update control node corresponds to at least one ECU. Each slave update control node is configured to control software update of a corresponding ECU. The master update control node is configured to control the slave update control nodes. A first candidate control node in the at least two candidate control nodes is configured to: send at least one piece of first voting information, where each piece of first voting information includes an identifier of one candidate control node; receive at least one piece of second voting information, where each piece of second voting information includes an identifier of one candidate control node, and each of a plurality of pieces of voting information that includes the first voting information and the second voting information is used to request a candidate control node indicated by an identifier included in the voting information to replace the master update control node to control the slave update control nodes; and when a quantity of pieces of voting information that includes an identifier of the first candidate control node in the at least one piece of second voting information is greater than or equal to a first threshold, send first result information and replace the master update control node, where the first result information includes the identifier of the first candidate control node, and the first result information is used to indicate that the first candidate control node replaces the master update control node; or when the first candidate control node receives second result information, determine that the second candidate control node replaces the master update control node, where the second result information includes an identifier of the second candidate control node, the second result information is used to indicate that the second candidate control node replaces the master update control node, the second result information is sent when a quantity of pieces of voting information that includes the identifier of the second candidate control node and that is received by the second candidate control node is greater than or equal to the first threshold, and the first threshold is determined based on a quantity of candidate control nodes.

The first candidate control node is any one of the plurality of candidate control nodes.

Optionally, the first candidate control node is specifically configured to: when detecting that the master update control node is faulty, send the first voting information to each candidate control node other than the first candidate control node in the at least two candidate control nodes. The first voting information includes the identifier of the first candidate control node.

Optionally, the first candidate control node is specifically configured to: send probe information to the master update control node and start a timer; and when no response information for the probe information is received before the timer expires, determine that the master update control node is faulty.

Optionally, the first candidate control node is specifically configured to receive the second voting information from a third candidate control node. The second voting information includes an identifier of the third candidate control node. That the first candidate control node sends the at least one piece of first voting information includes: The first candidate control node sends the first voting information to the third candidate control node. An identifier included in the first voting information is determined based on a value relationship between a first value and a second value. The first value is a value corresponding to the identifier of the first candidate control node. The second value is a value corresponding to the identifier of the third candidate control node.

Optionally, the first candidate control node is specifically configured to receive the second voting information from a fourth candidate control node. The second voting information includes an identifier of the fourth candidate control node and information about an available resource of the fourth candidate control node. That the first candidate control node sends the first voting information includes: The first candidate control node sends the first voting information to the fourth candidate control node. An identifier included in the first voting information is determined based on a value relationship between a third value and a fourth value. The third value is a value of an available resource of the first candidate control node. The fourth value is a value of an available resource of the first candidate control node.

Optionally, the first voting information further includes information about the available resource of the first candidate control node.

Optionally, the first threshold is greater than or equal to one half of the quantity of candidate control nodes.

Optionally, the candidate control node is configured in the slave update control node, or the candidate control node is the slave update control node.

Optionally, the candidate control node is configured in the ECU.

Optionally, the electronic system is configured in a smart car.

According to a fourth aspect, a smart car is provided, including the electronic system according to the third aspect and any implementation of the third aspect.

According to a fifth aspect, a software update apparatus is provided, including modules or units that are configured to perform the method in the first aspect and any one of the possible implementations of the first aspect.

According to a sixth aspect, a software update apparatus is provided and includes a processor. The processor is coupled to a memory. The processor may be configured to perform the method in the first aspect or any possible implementation of the first aspect. Optionally, the communications device may further include a memory. Optionally, the communications device further includes a communications interface, and the processor is coupled to the communications interface. Optionally, the communications device further includes a communications interface, and the processor is coupled to the communications interface.

In an implementation, the software update apparatus is a communications device. In this case, the communications interface may be a transceiver or an input/output interface.

In another implementation, the software update apparatus is a chip or a chip system. In this case, the communications interface may be an input/output interface, an interface circuit, an output circuit, an input circuit, a pin, or a related circuit on the chip or the chip system. The processor may also be embodied as a processing circuit or a logic circuit.

According to a seventh aspect, a software update apparatus is provided, including an input circuit, an output circuit, and a processing circuit. The processing circuit is configured to: receive a signal by using the input circuit, and transmit a signal by using the output circuit, so that the method in the first aspect and any possible implementation of the first aspect is implemented.

In a specific implementation process, the communications apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be different circuits or a same circuit. In this case, the circuit is used as the input circuit and the output circuit at different moments. Specific implementations of the processor and the circuits are not limited in embodiments of this application.

According to an eighth aspect, a software update apparatus is provided, including a processor and a memory. The processor is configured to: read instructions stored in the memory, receive a signal by using a receiver, and transmit a signal by using a transmitter, to perform the method in the first aspect and various possible implementations of the first aspect.

Optionally, there are one or more processors, and there are one or more memories.

Optionally, the memory may be integrated into the processor, or the memory and the processor are separately disposed.

In specific implementation, the memory may be a non-transitory (non-transitory) memory, for example, a read-only memory (read-only memory, ROM). The memory and the processor may be integrated into a same chip, or may be separately disposed on different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processor in the eighth aspect may be a chip. The processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented through reading software code stored in the memory. The memory may be integrated into the processor, or may exist independently outside the processor.

According to a ninth aspect, a computer program product is provided. The computer program product includes a computer program (which may also be referred to as code or an instruction). When the computer program is run, a computer is enabled to perform the method in the first aspect and any possible implementation of the first aspect.

According to a tenth aspect, a computer-readable medium is provided. The computer-readable medium stores a computer program (which may also be referred to as code or an instruction). When the computer program is run on a computer, the computer is enabled to perform the method in the first aspect or any possible implementation of the first aspect.

### BRIEF DESCRIPTION OF DRAWINGS

FIG. 1 is a schematic diagram of an example of an electronic system to which a software update method in this application is applicable;
FIG. 2 is a schematic flowchart of an example of a procedure of a software update method in this application;
FIG. 3 is a schematic interaction diagram of an example of a procedure of a software update method in this application;
FIG. 4 is a schematic interaction diagram of an example of a procedure of a software update method in this application;
FIG. 5 is a schematic interaction diagram of an example of a procedure of a software update method in this application;
FIG. 6 is a schematic interaction diagram of an example of a procedure of a software update method in this application;
FIG. 7 is a schematic diagram of a structure of an example of a software update apparatus in this application;
FIG. 8 is a schematic diagram of a structure of another example of a software update apparatus in this application; and
FIG. 9 is a schematic diagram of a structure of still another example of a software update apparatus in this application.

### DESCRIPTION OF EMBODIMENTS

The following describes technical solutions of this application with reference to the accompanying drawings.

The solutions of this application are applicable to a software update process of an electronic system including a plurality of ECUs, and in particular, applicable to a software update process of a smart car using an OTA manner.

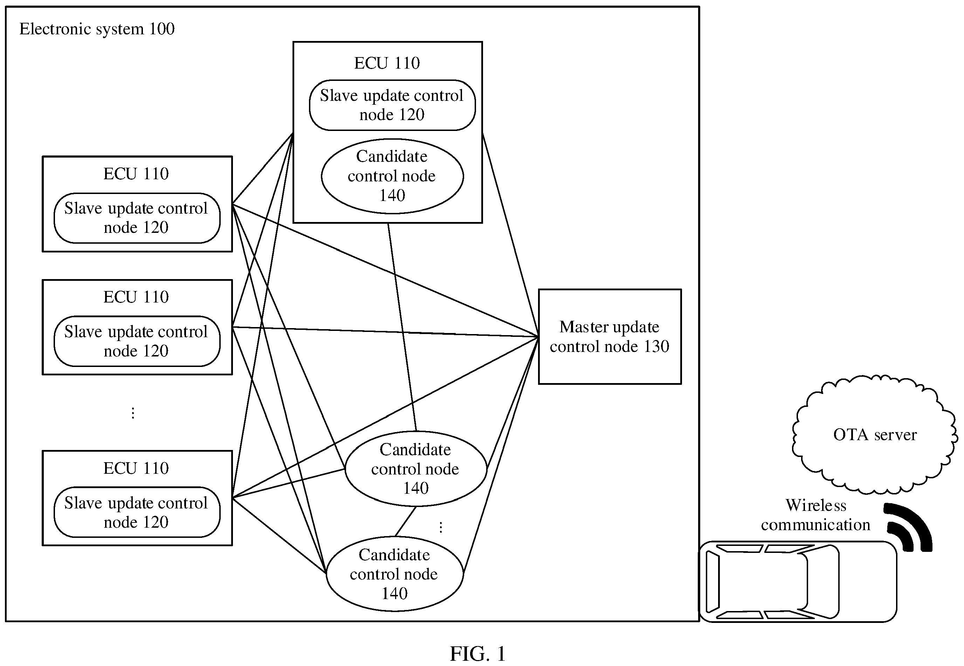

FIG. 1 is a schematic diagram of an example of an electronic system 100 to which a software update method provided in this application is applicable. As shown in FIG. 1, the electronic system 100 includes:
a plurality of ECUs 110;
a plurality of Update Control Slaves 120;
an Update Control Master 130; and
a plurality of candidate control nodes (Update Control Candidate) 140.

In the following, for ease of understanding, the Update Control Slave is briefly referred to as a Slave, the Update Control Master is briefly referred to as a Master, and the Update Control Candidate is briefly referred to as a Candidate.

The ECU 110 includes but is not limited to components such as a microprocessor or a microcontroller unit (Microcontroller Unit, MCU), a memory, an input/output (input/output, I/O), an analog to digital converter (Analog to Digital Converter, ADC), and a large-scale integrated circuit such as shaping and driving.

In this application, software of the ECU 110, for example, application software installed on the ECU 110 or operating system software installed on the ECU 110, may be updated by using an update package.

A structure and functions of the ECU 110, and specific actions in an update process may be similar to those in the conventional technologies. To avoid repetition, detailed description is omitted herein.

In this application, each ECU 110 corresponds to one Slave 120. The Slave 120 is responsible for receiving an update package and control information of the corresponding ECU 110 from the Master 130 (for example, an update policy including for example an update time, software that needs to be updated, and a software update sequence), and controlling, based on the control information and the update package, update of the corresponding ECU 110.

In an implementation, some or all of the plurality of Slaves 120 may be configured in a corresponding ECU 110.

In another implementation, some or all of the plurality of Slaves 120 may be configured independently of a corresponding ECU 110, and may be communicatively connected, for example, in a wired manner or a wireless manner.

In still another implementation, some of the plurality of ECUs 110 may further share one or more Slaves 120.

A structure and functions of the Slave 120, and specific actions in an update process may be similar to those in the conventional technologies. To avoid repetition, detailed description is omitted herein.

In addition, a configuration manner and a connection relationship of the Slave 120 and the ECU 110 may be similar to those in the conventional technologies. To avoid repetition, detailed description is omitted herein.

The Master 130 is configured to: in a wireless transmission manner such as a cellular network, a wireless local area network (for example, Wi-Fi), Bluetooth (Bluetooth), or satellite communication, obtain update packages of some or all of the plurality of ECUs 110 from a server that can provide a service corresponding to software; and determine update policies of the ECUs 110, to send update packages and control information to the Slaves 120 corresponding to the ECUs 110.

In an implementation, the Master 130 is configured with a wireless communications unit such as a radio frequency module and an antenna, so that the Master 130 can perform wireless communication by using a wireless communications unit of the Master 130.

In still another implementation, the electronic system may further include a wireless communications device. In this case, the Master 130 is communicatively connected to the wireless communications unit, so that the Master 130 can perform wireless communication by using the wireless communications device in the electronic system.

In still another implementation, the electronic system is configured in an apparatus such as a smart car, and the smart car may include a wireless communications device or a component (for example, an antenna) used for wireless communication. In this case, the Master 130 is connected to a wireless communications device or component in the smart car, so that the Master 130 can perform wireless communication by using the wireless communications device or component in the smart car.

A structure and functions of the Master 130, and specific actions in an update process may be similar to those in the conventional technologies. To avoid repetition, detailed description is omitted herein.

The following describes the Candidate 140 in detail.

First, a structure and configuration of the Candidate 140 are described.

The Candidate 140 needs to replace the Master 130 to perform OTA when the Master 130 is faulty. Therefore, the Candidate 140 is similar to the Master 130, and is configured to: in a wireless transmission manner such as a cellular network, a wireless local area network (for example, Wi-Fi), or satellite communication, obtain update packages of some or all of the plurality of ECUs 110 from a server that provides a service corresponding to software; and determine update policies of the ECUs 110. Each Candidate 140 is communicatively connected to each Slave 120, to send an update package and control information to the Slave 120 corresponding to the ECU 110.

In an implementation, the Candidate 140 is configured with a wireless communications unit such as a radio frequency module and an antenna, so that the Candidate 140 can perform wireless communication by using a wireless communications unit of the Candidate 140.

In still another implementation, the electronic system may further include a wireless communications device. In this case, the Candidate 140 is communicatively connected to the wireless communications unit, so that the Candidate 140 can perform wireless communication by using the wireless communications device in the electronic system.

In still another implementation, the electronic system is configured in an apparatus such as a smart car, and the smart car may include a wireless communications device or a component (for example, an antenna) used for wireless communication. In this case, the Candidate 140 is connected to a wireless communications device or component in the smart car, so that the Candidate 140 can perform wireless communication by using the wireless communications device or component in the smart car.

In addition, in this application, any two of the plurality of Candidates 140 can communicate with each other.

For example, there is direct communication connection between some of the plurality of Candidates 140, so that direct communication can be performed between two Candidates 140 with direct communication connection therebetween.

For another example, there is indirect communication connection between some of the plurality of Candidates 140, so that indirect communication can be performed through forwarding performed by one or more Candidates 140 between two Candidates 140 with indirect communication connection therebetween.

The following describes actions of the Candidate 140 in a procedure of the software update method in this application.

Actions of the plurality of Candidates 140 in the electronic system 100 in a software update process are similar. For ease of understanding and description, one Candidate (denoted as a candidate control node #A or a Candidate #A, that is, an example of the first candidate control node) in the plurality of Candidates 140 is used as an example for description.

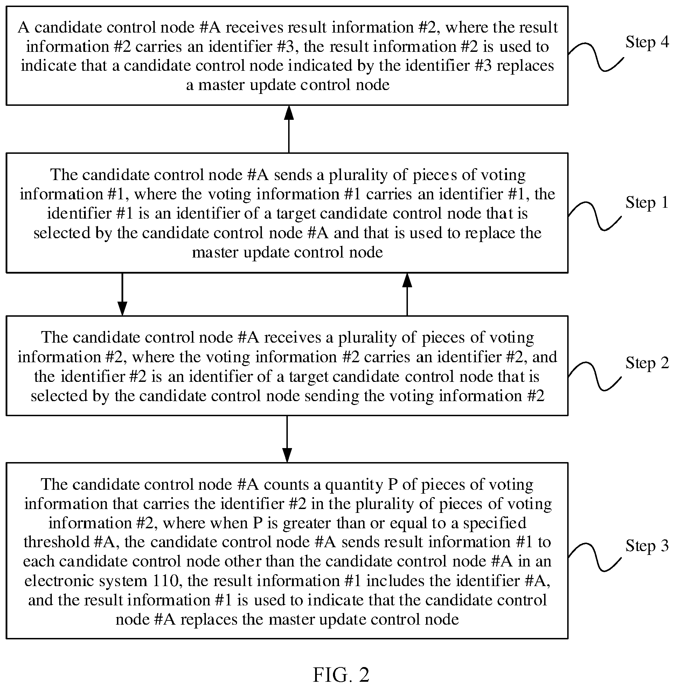

As shown in FIG. 2, in step 1, the Candidate #A sends a plurality of pieces of voting information #1 (that is, an example of first voting information). The voting information #1 carries an identifier #1. The identifier #1 is an identifier of a Candidate (for ease of understanding, hereinafter referred to as a target Candidate) that is selected by the Candidate #A and that is used to replace the Master 130 (for example, replace the Master 130 to obtain a software update package of each Slave 120 in a wireless communication manner, determine a software update policy of each Slave 120, and deliver control information and a software update package to each Slave 120). It should be noted that in this application, identifiers #1 carried in the plurality of pieces of voting information #1 may be the same or may be different. This is not specifically limited in this application.

Step 2: The Candidate #A receives a plurality of pieces of voting information #2 (that is, an example of the second voting information). The voting information #2 carries an identifier #2. The identifier #2 is an identifier of a target Candidate that is selected by the Candidate sending the voting information #2. It should be noted that in this application, identifiers #2 carried in the plurality of pieces of voting information #2 may be the same or may be different. This is not specifically limited in this application.

A sequence of step 1 and step 2 is not particularly limited. In some implementations, transmission of the voting information #2 may be triggered by the voting information #1. In some other implementations, transmission of the voting information #1 may be triggered by the voting information #2. Subsequently, a specific process is described in detail.

Step 3: The Candidate #A counts a quantity P of pieces of voting information (that is, voting information whose identifier #2 is an identifier #A) that carries the identifier of the Candidate #A (denoted as the identifier #A) in the plurality of pieces of voting information #2. When P is greater than or equal to a specified threshold #A, the Candidate #A sends result information #1 to each Candidate other than the Candidate #A in the electronic system 110. The result information #1 includes the identifier #A. The result information #1 is used to indicate that the Candidate #A (that is, the Candidate #A indicated by the identifier #A carried in the result information #1) replaces the Master 130.

The threshold #A may include but is not limited to K/2. Herein, K is a total quantity of Candidates 140 in the electronic system 100, and K is an integer greater than or equal to 2.

It should be noted that a value of the foregoing enumerated threshold #A is merely an example for description, and is not specifically limited in this application. A user may set the threshold #A randomly according to an actual requirement.

Alternatively, in step 4, the Candidate #A receives result information #2. The result information #2 carries an identifier #3. The result information #2 is used to indicate that a Candidate indicated by the identifier #3 replaces the Master 130. Therefore, the Candidate #A determines, based on the result information #2, that the Candidate indicated by the identifier #3 replaces the Master 130, and the Candidate #A does not replace the Master 130.

A transmit end (that is, the Candidate indicated by the identifier #3) of the result information #2 may count a value Q of voting information that carries the identifier #3 and that is received by the transmit end, and send the result information #2 when Q is greater than or equal to a specified threshold #A. Herein, Q is an integer.

In a possible case, only an earlier performed step in step 3 and step 4 may exist.

For example, if the Candidate #A receives the result information #2 before obtaining through counting a result that P is greater than or equal to the specified threshold #A, the action ends.

For another example, if the Candidate indicated by the identifier #3 receives the result information #1 before obtaining through counting a result that Q is greater than or equal to the specified threshold #A, the action ends. In other words, in this case, the Candidate #A does not receive the result information #2.

The following describes in detail possible manners (that is, a manner 1 to a manner 4 in the following) of processes of step 1 and step 2 above.

### Manner #1

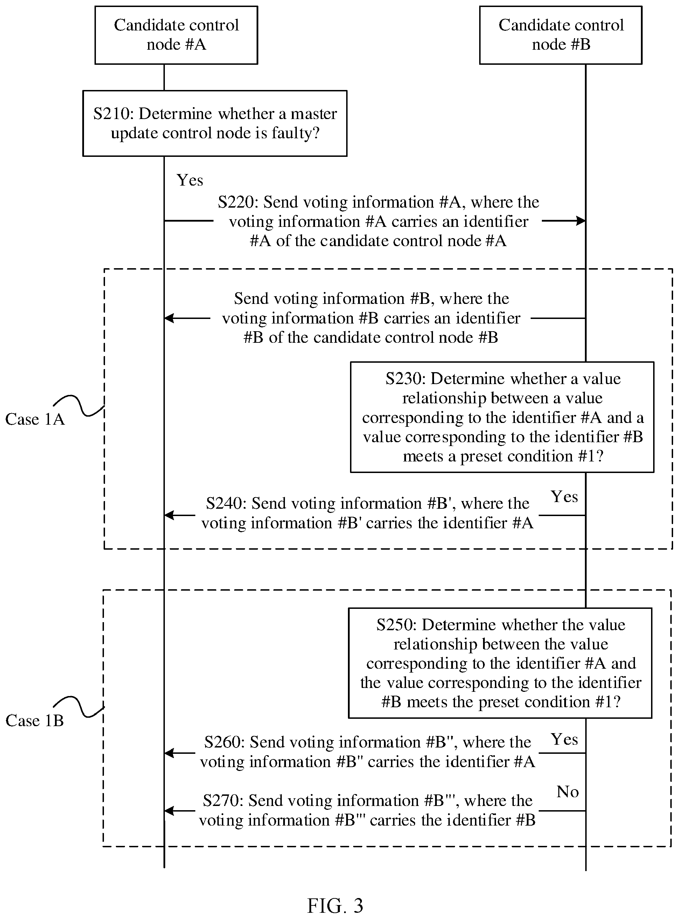

As shown in FIG. 3, in step S210, the Candidate #A periodically detects whether the Master 130 is faulty.

When it is detected that the Master 130 is faulty, in step S220 (that is, in a possible manner of step 1), the Candidate #A sends voting information #A (that is, an example of the foregoing voting information #1) to each Candidate other than the Candidate #Ainthe electronic system 110.

In this case, the target Candidate selected by the Candidate #A is the Candidate #A. In other words, the identifier #1 carried in the voting information #A is the identifier of the Candidate #A, and is denoted as the identifier #A (that is, an example of the foregoing identifier #1).

In an implementation, the Candidate #A periodically sends a detection signal (or a probe signal) to the Master 130.

In addition, after sending the detection signal, the Candidate #A may start a timer.

In an example instead of limitation, duration of the timer may be determined based on a communication delay T between the Candidate #A and the Master 130. Herein, T may indicate duration from a time point at which the Candidate #A generates the detection signal to a time point at which the Candidate #A receives a response signal sent by the Master 130, when the Master 130 is not faulty. For example, duration of the timer may be greater than or equal to T.

For example, the timer may be a timer implemented by using software, or the timer may be a timer implemented by using hardware. This is not specifically limited in this application.

The hardware timer may be integrated inside a central processing unit (central processing unit, CPU) of the Candidate #A, or may use a timer chip disposed outside the Candidate #A.

The software timer is a timer simulated by using a program. For example, a fixed clock tick may be generated by using a hardware timer. Each time the hardware timer is interrupted, a mark of global time is increased by 1. The software timer stores a timer time-up time (or timer duration). A program that is run in the Candidate #A and that corresponds to the software timer periodically scans the software timer. The timer time-up time is compared with the mark of the global time to determine whether the corresponding software timer is time up.

When the Master 130 is not faulty, after receiving the detection signal, the Master 130 sends a response signal to the Candidate #A. Therefore, after receiving the response signal, the Candidate #A may determine that the Master 130 is not faulty.

When the Master 130 is faulty, the Master 130 cannot send a response signal. Therefore, if the Candidate #A does not receive the response signal before the timer is time up, the Candidate #A may determine that the Master 130 is faulty.

Therefore, false detection for the fault of the Master 130 can be avoided.

In another implementation, the Master 130 may periodically send a heartbeat signal (or a probe signal) to various Candidates including the Candidate #A. The heartbeat signal is a very small data packet to the other interconnection party at intervals. It can be determined based on a reply status of the other interconnection party whether a communication link between two interconnection parties is disconnected.

When the Master 130 is not faulty, the Master 130 can send the heartbeat signal to the Candidate #A according to a specified period. Therefore, after receiving the heartbeat signal, the Candidate #A may determine that the Master 130 is not faulty.

When the Master 130 is faulty, the Master 130 cannot send the heartbeat signal. Therefore, if the Candidate #A does not receive the heartbeat signal in the specified period, the Candidate #A may determine that the Master 130 is faulty.

The Candidate receiving the voting information #A may perform the following operations. For ease of understanding, an action of a Candidate (denoted as a candidate control node #B or a Candidate #B) receiving the voting information #A is used as an example for description.

In this application, a time sequence relationship between a time point at which the Candidate #B sends the voting information and a time point at which the Candidate #B receives the voting information may include: Between receiving the voting information #A, the Candidate #B detects that the Master 130 is faulty, and sends the voting information #B (that is, a case 1A). Between receiving the voting information #A, the Candidate #B does not detect that the Master 130 is faulty, and does not send the voting information (that is, a case 1B). The foregoing two cases are separately described in detail in the following:

### Case 1A

If between receiving the voting information #A, the Candidate #B detects that the Master 130 is faulty, and sends the voting information #B (that is, an example of the foregoing voting information #2), the following operations may be performed.

The voting information #B is sent by the Candidate #B to all Candidates except the Candidate #B in the electronic system 110 after the Candidate #B detects that the Master 130 is faulty.

In addition, a method and a process by using which the Candidate #B detects that the Master 130 is faulty may be similar to the method and the process by using which the Candidate #A detects that the Master 130 is faulty. Herein, to avoid repetition, detailed description of the method and the process is omitted.

In this case, a target Candidate that is selected by the Candidate #B to replace the Master 130 is the Candidate #B. In other words, an identifier that is of the Candidate #B and that is carried in the voting information #B is denoted as an identifier #B (that is, an example of the foregoing identifier #2).

In addition, in this case, the Candidate #A can receive the voting information #B.

In step S230, the Candidate #B determines whether a value relationship between a value corresponding to the identifier #A and a value corresponding to the identifier #B meets a preset condition # 1.

A determining result of step S230 includes: The value relationship between the value corresponding to the identifier #A and the value corresponding to the identifier #B does not meet a preset condition #1 (that is, a result 1), or the value relationship between the value corresponding to the identifier #A and the value corresponding to the identifier #B meets a preset condition #1 (that is, a result 2). The following separately describes processing corresponding to the foregoing different results.

### Result 1

In the determining result is no, that is, the value relationship between the value corresponding to the identifier #A and the value corresponding to the identifier #B does not meet the preset condition #1, the Candidate #B does not perform any operation.

In an example instead of limitation, the condition #1 may correspond to a selection criterion of the target Candidate.

For example, if the selection criterion of the target Candidate is that a Candidate that participates in the voting and that has an identifier corresponding to a smallest value is used as the target Candidate for replacing the Master 130, the condition #1 may be that the value corresponding to the identifier #A is less than the value corresponding to the identifier #B.

For another example, if the selection criterion of the target Candidate is that a Candidate that participates in the voting and that has an identifier corresponding to a largest value is used as the target Candidate for replacing the Master 130, the condition #1 may be that the value corresponding to the identifier #A is greater than the value corresponding to the identifier #B.

For another example, if the selection criterion of the target Candidate is that a Candidate that participates in the voting and that has an identifier corresponding to a value closest to a value #1 is used as the target Candidate for replacing the Master 130, the condition #1 may be that the value corresponding to the identifier #A is closer to the value #1 than the value corresponding to the identifier #B.

For ease of understanding and description, the following uses the following example for description: The selection criterion of the target Candidate is that a Candidate that participates in the voting and that has an identifier corresponding to a smallest value is used as the target Candidate for replacing the Master 130.

In other words, if the result 1 is that the value corresponding to the identifier #A is greater than the value corresponding to the identifier #B, the Candidate #B does not perform any operation.

### Result 2

If the determining result is yes, that is, the value relationship between the value corresponding to the identifier #Aand the value corresponding to the identifier #B meets the preset condition #1, in step S240, the Candidate #B may send voting information #B' (that is, another example of the voting information #2) to the Candidate #A. The voting information #B' carries the identifier #A (that is, another example of the identifier #2).

In other words, if the result 2 is that the value corresponding to the identifier #A is less than the value corresponding to the identifier #B, the Candidate #B sends the voting information #B'.

### Case 1B

If between receiving the voting information #A, the Candidate #B does not detect that the Master 130 is faulty, the Candidate #B may perform the following operations.

In step S250, the Candidate #B determines whether the value relationship between the value corresponding to the identifier #A and the value corresponding to the identifier #B meets the preset condition #1.

If the determining result is no, that is, the value relationship between the value corresponding to the identifier #A and the value corresponding to the identifier #B does not meet the preset condition #1, for example, the value corresponding to the identifier #A is greater than the value corresponding to the identifier #B, in step S260, the Candidate #B sends voting information #B" (that is, still another example of the voting information #2) to the Candidate #A. The voting information #B" carries the identifier #B (that is, still another example of the identifier #2).

If the determining result is yes, that is, the value relationship between the value corresponding to the identifier #A and the value corresponding to the identifier #B does not meet the preset condition #1, for example, the value corresponding to the identifier #A is less than the value corresponding to the identifier #B, in step S270, the Candidate #B sends voting information #B‴ (that is, still another example of the voting information #2) to the Candidate #A. The voting information #B‴ carries the identifier #A (that is, still another example of the identifier #2).

### Manner #2

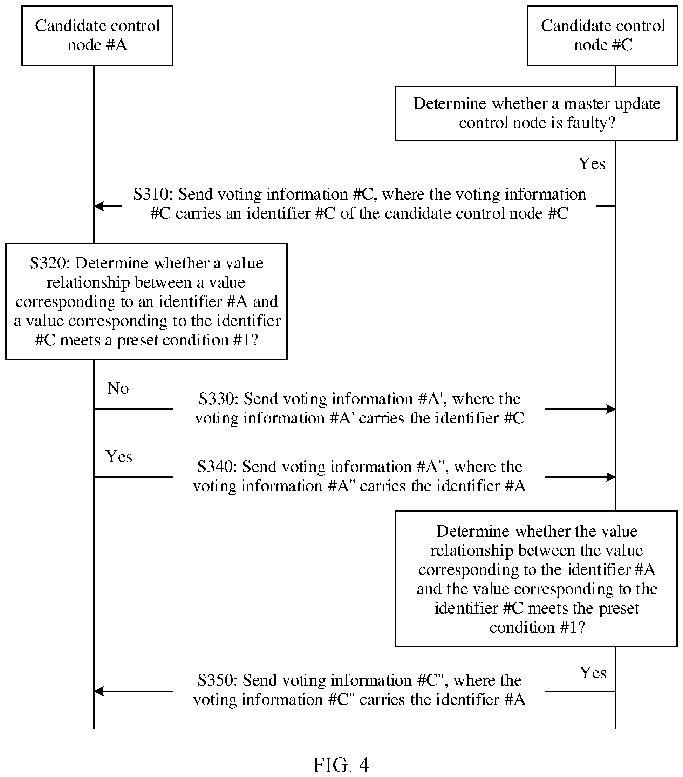

As shown in FIG. 4, before the Candidate #A detects that the Master 130 is faulty, in step S310, the Candidate #A receives voting information sent by one or more Candidates. For ease of understanding, an action of a Candidate (denoted as a candidate control node #C or a Candidate #C) sending voting information is used as an example for description. In other words, in step S310, the Candidate #A receives voting information #C (that is, still another example of the voting information #2) sent by the Candidate #C.

The voting information #C is sent by the Candidate #C to all Candidates except the Candidate #C in the electronic system 110 after the Candidate #C detects that the Master 130 is faulty.

In addition, a method and a process by using which the Candidate #C detects that the Master 130 is faulty may be similar to the method and the process by using which the Candidate #A detects that the Master 130 is faulty. Herein, to avoid repetition, detailed description of the method and the process is omitted.

In this case, a target Candidate that is selected by the Candidate #C to replace the Master 130 is the Candidate #C. In other words, an identifier that is of the Candidate #C and that is carried in the voting information #C is denoted as an identifier #C (that is, still another example of the identifier #2).

In step S320, the Candidate #A determines whether a value relationship between the value corresponding to the identifier #A and a value corresponding to the identifier #C meets a preset condition #2.

The condition #2 is similar to the condition #1. A difference lies only in that the identifier #C replaces the identifier #B. To avoid repetition, detailed description of the condition #2 is omitted.

For ease of understanding and description, the following uses the following example for description: The selection criterion of the target Candidate is that the Candidate that participates in the voting and that has the identifier corresponding to the smallest value is used as the target Candidate for replacing the Master 130, that is, the condition #1 is that the value corresponding to the identifier #A is less than the value corresponding to the identifier #C.

If the determining result is no, that is, the value relationship between the value corresponding to the identifier #A and the value corresponding to the identifier #C does not meet the preset condition #2, for example, the value corresponding to the identifier #A is greater than the value corresponding to the identifier #C, in step S330 (that is, another possible manner of step 1), the Candidate #A sends voting information #A' (that is, still another example of the voting information #1). The voting information #A' carries the identifier #C (that is, still another example of the identifier #1).

If the determining result is yes, that is, the value relationship between the value corresponding to the identifier #A and the value corresponding to the identifier #B meets the preset condition #1, for example, the value corresponding to the identifier #A is less than the value corresponding to the identifier #C, in step S340 (that is, still another possible manner of step 1), the Candidate #A sends voting information #A" (that is, still another example of the voting information #1). The voting information #A" carries the identifier #A (that is, still another example of the identifier #1).

In addition, in this case, in step S350, the Candidate #C receives the voting information #A". In addition, after it is determined that the value relationship between the value corresponding to the identifier #A and the value corresponding to the identifier #B meets the preset condition #1, the Candidate #C sends voting information #C" (that is, still another example of the voting information #2) to the Candidate #A. The voting information #C" carries the identifier #A (that is, still another example of the identifier #2).

### Manner 3

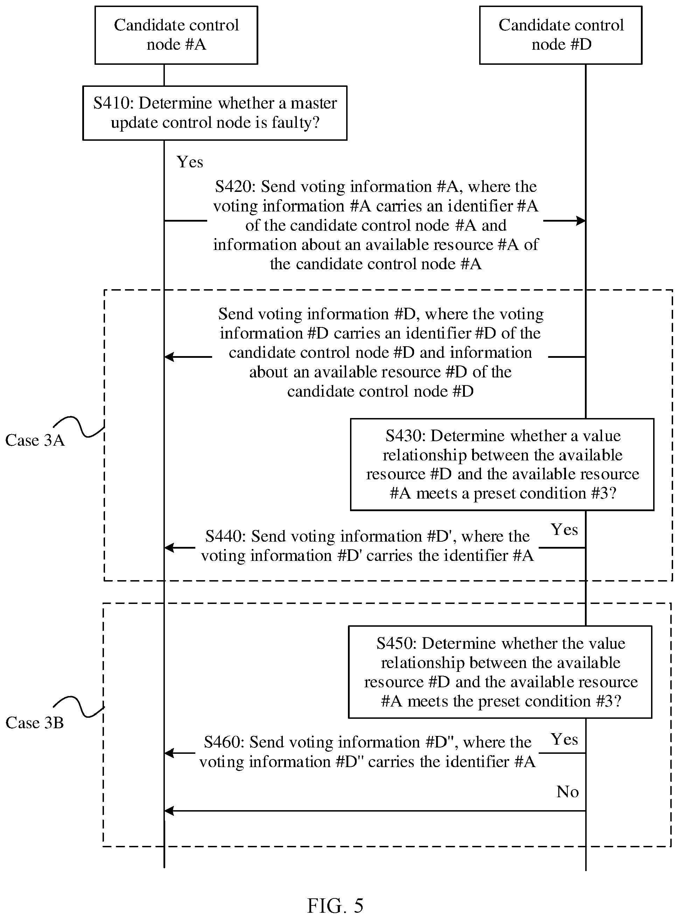

As shown in FIG. 5, in step S410, the Candidate #A periodically detects whether the Master 130 is faulty.

When it is detected that the Master 130 is faulty, in step S420 (that is, in a possible manner of step 1), the Candidate #A sends voting information #A (that is, still another example of the foregoing voting information #1) to each Candidate other than the Candidate #A in the electronic system 110.

In this case, the target Candidate selected by the Candidate #A is the Candidate #A. In other words, the identifier #1 carried in the voting information #A is the identifier of the Candidate #A, and is denoted as the identifier #A (that is, still another example of the identifier #1).

In addition, in this case, the voting information #A further carries information about a current available resource (for example, a computing resource or a storage resource, denoted as an available resource #A) of the Candidate #A. The information about the available resource #A may be used to indicate information such as a size of the available resource #A.

It should be understood that foregoing enumerated content indicated by the information about the available resource #A is merely an example for description. This application is not particularly limited. For example, the information about the available resource #A may further indicate available duration of the available resource #A, a current load status of the Candidate #A, or a load status of an ECU on which the Candidate #A is configured.

The Candidate receiving the voting information #A may perform the following operations. A Candidate (denoted as, a candidate control node #D or a Candidate #D) receiving the voting information #A is used as an example for description.

In this application, a time sequence relationship between a time point at which the Candidate #D sends the voting information and a time point at which the Candidate #D receives the voting information may include: Between receiving the voting information #A, the Candidate #D detects that the Master 130 is faulty, and sends voting information #D (that is, a case 3A). Between receiving the voting information #A, the Candidate #B does not detect that the Master 130 is faulty, and does not send the voting information (that is, a case 3B). The foregoing two cases are separately described in detail in the following:

### Case 3A

If between receiving the voting information #A, the Candidate #D detects that the Master 130 is faulty, and sends the voting information #D (that is, still another example of the voting information #2), the following operations may be performed.

The voting information #D is sent by the Candidate #D to all Candidates except the Candidate #D in the electronic system 110 after the Candidate #D detects that the Master 130 is faulty.

In addition, a method and a process by using which the Candidate #D detects that the Master 130 is faulty may be similar to the described fault detection method and process for the Master 130 in the foregoing manner 1. Herein, to avoid repetition, detailed description of the method and the process is omitted.

In this case, a target Candidate that is selected by the Candidate #D to replace the Master 130 is the Candidate #D. In other words, an identifier that is of the Candidate #D and that is carried in the voting information #D is denoted as an identifier #D (that is, still another example of the identifier #2).

In addition, in this case, the voting information #D further carries information about a current available resource (for example, a computing resource or a storage resource, denoted as an available resource #D) of the Candidate #D. The information about the available resource #D may be used to indicate information such as a size of the available resource #D.

It should be understood that foregoing enumerated content indicated by the information about the available resource #D is merely an example for description. This application is not particularly limited. For example, the information about the available resource #D may further indicate available duration of the available resource #D, a current load status of the Candidate #D, or a load status of an ECU on which the Candidate #D is configured.

In addition, in this case, the Candidate #A can receive the voting information #D.

In step S430, the Candidate #D determines whether a relationship between the available resource #A and the available resource #D meets a preset condition #3.

A determining result of step S430 includes: The value relationship between the available resource #A and the available resource #D does not meet the preset condition #3 (that is, the result 3), or the value relationship between the available resource #A and the available resource #D meets the preset condition #3 (that is, a result 4). The following separately describes processing corresponding to the foregoing different results.

### Result 3

If the determining result is no, that is, the relationship between the available resource #A and the available resource #D does not meet the preset condition #3, the Candidate #D does not perform any operation.

In an example instead of limitation, the condition #3 may correspond to a selection criterion of the target Candidate.

For example, if the selection criterion of the target Candidate is that a Candidate that participates in the voting and that has a largest available resource is used as the target Candidate for replacing the Master 130, the condition #3 may be that a size of the available resource #A is larger than a size of the available resource #D.

In this case, that the determining result is no indicates that the size of the available resource #A is smaller than the size of the available resource #D.

### Result 4

If the determining result is yes, that is, the value relationship between the available resource #A and the available resource #D meets the preset condition #3, that is, the size of the available resource #A is larger than the size of the available resource #D, in step S440, the Candidate #D may send voting information #D' (that is, still another example of the voting information #2) to the Candidate #A. The voting information #D' carries the identifier #A (that is, still another example of the identifier #2).

### Case 3B

If between receiving the voting information #A, the Candidate #D does not detect that the Master 130 is faulty, the Candidate #D may perform the following operations.

In step S450, the Candidate #D determines whether a value relationship between the available resource #A and the available resource #D meets the preset condition #3.

If the determining result is no, that is, the size of the available resource #A is smaller than the size of the available resource #D, in step S460, the Candidate #D sends voting information #D" (that is, still another example of the voting information #2) to the Candidate #A. The voting information #D" carries the identifier #D (that is, still another example of the identifier #2).

If the determining result is yes, that is, the size of the available resource #A is larger than the size of the available resource #D, in step S470, the Candidate #D sends voting information #D‴ (that is, still another example of the voting information #2) to the Candidate #A. The voting information #D‴ carries the identifier #A (that is, still another example of the identifier #2).

### Manner #4

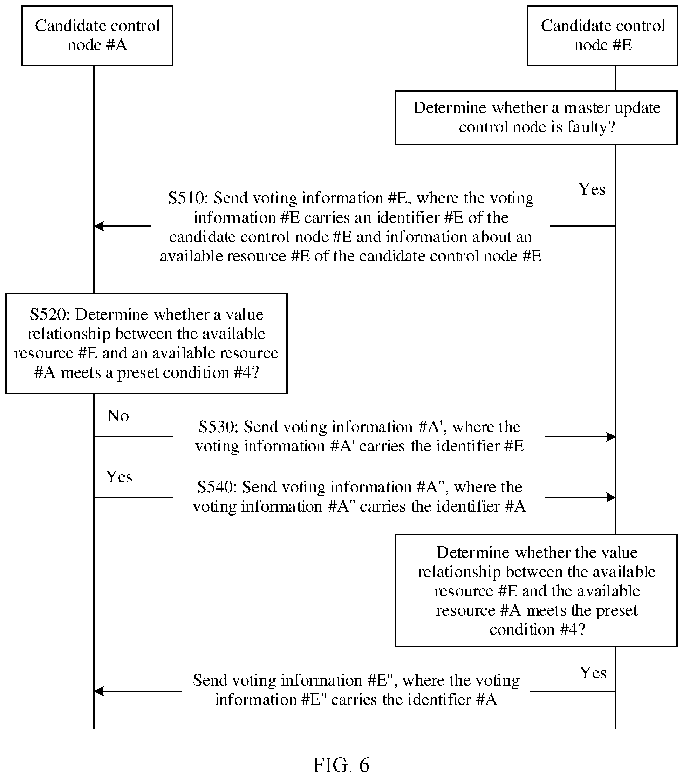

As shown in FIG. 6, before the Candidate #A detects that the Master 130 is faulty, in step S510, the Candidate #A receives voting information sent by one or more Candidates. For ease of understanding, an interaction process between the Candidate #A and a Candidate (denoted as a candidate control node #E or a Candidate #E) is used as an example for description. In other words, in step S510, the Candidate #A receives voting information #E (that is, still another example of the voting information #2) sent by the Candidate #E.

The voting information #E is sent by the Candidate #E to all Candidates except the Candidate #E in the electronic system 110 after the Candidate #E detects that the Master 130 is faulty.

In addition, a method and a process by using which the Candidate #E detects that the Master 130 is faulty may be similar to the fault detection method and process for the Master 130 in the foregoing manner 1. Herein, to avoid repetition, detailed description of the method and the process is omitted.

In this case, a target Candidate that is selected by the Candidate #E to replace the Master 130 is the Candidate #E. In other words, an identifier that is of the Candidate #E and that is carried in the voting information #E is denoted as an identifier #E (that is, still another example of the identifier #2).

In addition, in this case, the voting information #E further carries information about a current available resource (for example, a computing resource or a storage resource, denoted as an available resource #E) of the Candidate #E. The information about the available resource #E may be used to indicate information such as a size of the available resource #E.

It should be understood that foregoing enumerated content indicated by the information about the available resource #E is merely an example for description. This application is not particularly limited. For example, the information about the available resource #E may further indicate available duration of the available resource #E, a current load status of the Candidate #E, or a load status of an ECU on which the Candidate #E is configured.

In step S520, the Candidate #A determines whether a value relationship between the available resource #A and the available resource #E meets a preset condition #4.

The condition #4 is similar to the condition #3. A difference lies only in that the available resource #E replaces the available resource #D. To avoid repetition, detailed description is omitted.

For ease of understanding and description, the following uses the following example for description: The selection criterion of the target Candidate is that the Candidate that participates in the voting and that has a largest available resource is used as the target Candidate for replacing the Master 130, that is, the condition #4 is that the value corresponding to the identifier #A is greater than the value corresponding to the identifier #C.

If the determining result is no, that is, the size of the available resource #A is smaller than the size of the available resource #E, for example, in step S530, the Candidate #A sends voting information #A' (that is, still another example of the voting information #1). The voting information #A' carries the identifier #E (that is, still another example of the identifier #1).

If the determining result is yes, that is, the size of the available resource #A is larger than the size of the available resource #E, in step S540, the Candidate #A sends voting information #A". The voting information #A" carries the identifier #A.

In addition, in this case, the Candidate #E receives the voting information #A". In addition, after it is determined that the size of the available resource #A is larger than the size of the available resource #E, the Candidate #A sends voting information #E" (that is, still another example of the voting information #2). The voting information #E" carries the identifier #A (that is, still another example of the identifier #2).

It should be noted that the foregoing two or more manners in the foregoing manners 1 to 4 may simultaneously appear in a voting process of this application. This is not specifically limited in this application.

An embodiment of this application provides a communications apparatus. In a possible implementation, the apparatus is configured to implement steps or procedures corresponding to a receive end in the foregoing method embodiments. In another possible implementation, the apparatus is configured to implement steps or procedures corresponding to a transmit end in the foregoing method embodiments.

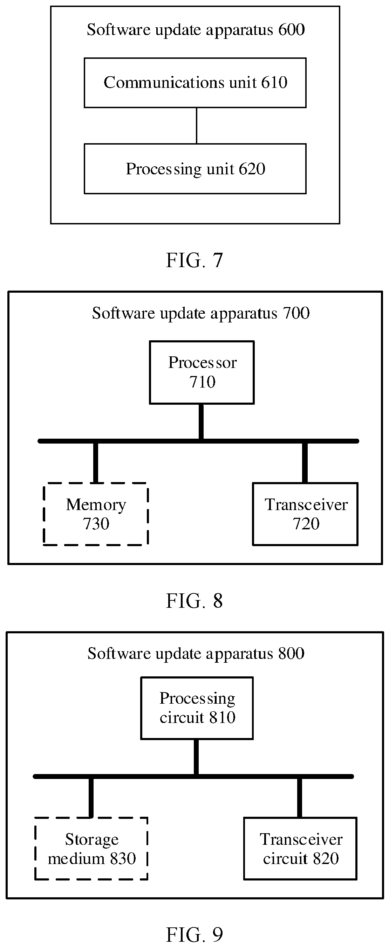

FIG. 7 is a schematic block diagram of a software update apparatus according to an embodiment of this application. As shown in FIG. 7, the apparatus 600 may include a communications unit 610 and a processing unit 620. The communications unit 610 may communicate with the external. The processing unit 620 is configured to perform data processing. The communications unit 610 may further be referred to as a communications interface or a transceiver unit.

In a possible design, the apparatus 600 may implement executed steps or procedures corresponding to a candidate control node (for example, a Candidate #A) in the foregoing method embodiments. The processing unit 620 is configured to perform an operation related to processing of the candidate control node in the foregoing method embodiments. The communications unit 610 is configured to perform an operation related to sending and receiving of the candidate control node in the foregoing method embodiments.

It should be understood that the apparatus 600 herein is embodied in a form of function units. The term "unit" herein may refer to an application specific integrated circuit (application specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 600 may be specifically a transmit-end device in the foregoing embodiments, and may be configured to perform procedures and/or steps corresponding to a transmit-end device in the foregoing method embodiments. Alternatively, the apparatus 600 may be specifically the candidate control node in the foregoing method embodiments, and may be configured to perform procedures and/or steps corresponding to the candidate control node in the foregoing method embodiments. To avoid repetition, details are not described herein again.

The apparatus 600 in the foregoing solutions has a function of implementing corresponding steps performed by the candidate control node in the foregoing method. The function may be implemented by hardware, or may be implemented by hardware executing corresponding software. The hardware or the software includes one or more modules corresponding to the foregoing functions. For example, the communications unit may be replaced with a transceiver (for example, a sending unit in the communications unit may be replaced with a transmitter, and a receiving unit in the communications unit may be replaced with a receiver). Another unit such as the processing unit may be replaced with a processor, to separately perform a sending operation, a receiving operation, and a related processing operation in the method embodiments.

In addition, the communications unit may further be a transceiver circuit (for example, may include a receive circuit and a transmit circuit). The processing unit may be a processing circuit. In this embodiment of this application, the apparatus in FIG. 7 may be the candidate control node in the foregoing embodiment, or may be a chip or a chip system configured in the candidate control node, for example, a system on chip (system on chip, SoC). The communications unit may be an input/output circuit or a communications interface. The processing unit is a processor, a microprocessor, or an integrated circuit integrated on the chip. This is not limited herein.

FIG. 8 shows a software update apparatus 700 according to an embodiment of this application. The apparatus 700 includes a processor 710 and a transceiver 720. The processor 710 and the transceiver 720 communicate with each other by using an internal connection channel. The processor 710 is configured to execute instructions to control the transceiver 720 to send a signal and/or receive a signal.

Optionally, the apparatus 700 may further include a memory 730. The memory 730 communicates with the processor 710 and the transceiver 720 by using an internal connection channel. The memory 730 is configured to store instructions. The processor 710 may execute the instructions stored in the memory 730. In a possible implementation, the apparatus 700 is configured to implement procedures and steps corresponding to the candidate control node (for example, a Candidate #A) in the foregoing method embodiments.

It should be understood that the apparatus 700 may be specifically the candidate control node in the foregoing embodiments, or may be a chip or a system on chip. Correspondingly, the transceiver 720 may be a transceiver circuit of the chip. This is not limited herein. Specifically, the apparatus 700 may be configured to perform the steps and/or procedures corresponding to the candidate control node in the foregoing method embodiments. Optionally, the memory 730 may include a read-only memory and a random access memory, and provide instructions and data to the processor. A part of the memory may further include a non-volatile random access memory. For example, the memory may further store information about a device type. The processor 710 may be configured to execute the instructions stored in the memory. In addition, when the processor 710 executes the instructions stored in the memory, the processor 710 is configured to perform the steps and/or procedures corresponding to an AP or a STA in the foregoing method embodiments.

In an implementation process, the steps in the foregoing methods can be implemented by using a hardware integrated logic circuit in the processor, or by using instructions in a form of software. The steps of the method disclosed with reference to embodiments of this application may be directly performed and completed by a hardware processor, or may be performed and completed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in this embodiment of this application may be an integrated circuit chip, and has a signal processing capability. In an implementation process, steps in the foregoing method embodiments are implemented by using a hardware integrated logic circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. The processor in this embodiment of this application may implement or perform the methods, the steps, and the logic block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these and any memory of another appropriate type.

FIG. 9 shows a software update apparatus 800 according to an embodiment of this application. The apparatus 800 includes a processing circuit 810 and a transceiver circuit 820. The processing circuit 810 and the transceiver circuit 820 communicate with each other by using an internal connection channel. The processing circuit 810 is configured to execute instructions to control the transceiver circuit 820 to send a signal and/or receive a signal.

Optionally, the apparatus 800 may further include a storage medium 830. The storage medium 830 communicates with the processing circuit 810 and the transceiver circuit 820 by using an internal connection channel. The storage medium 830 is configured to store instructions. The processing circuit 810 may execute the instructions stored in the storage medium 830. In a possible implementation, the apparatus 800 is configured to implement procedures and steps corresponding to the candidate control node (for example, a Candidate #A) in the foregoing method embodiments.

According to the method provided in embodiments of this application, this application further provides a computer program product, and the computer program product includes computer program code. When the computer program code is run on a computer, the computer is enabled to perform the method in any implementation shown in FIG. 2 to FIG. 6.

According to the method provided in embodiments of this application, this application further provides a computer-readable medium, and the computer-readable medium stores program code. When the program code is run on a computer, the computer is enabled to perform the method in any implementation shown in FIG. 2 to FIG. 6.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A software update method, applied to an electronic system (100), wherein the electronic system comprises a plurality of electronic control units ECUs (110), a plurality of slave update control nodes (120), a master update control node (130), and at least two candidate control nodes (140), each of the plurality of slave update control nodes corresponds to at least one ECU, each slave update control node is configured to control software update of a corresponding ECU, the master update control node is configured to control the slave update control nodes, and the method comprises:
sending (step 1), by a first candidate control node, at least one piece of first voting information, wherein each piece of first voting information comprises an identifier of one candidate control node;
receiving (step 2), by the first candidate control node, at least one piece of second voting information, wherein each piece of second voting information comprises an identifier of one candidate control node, each of a plurality of pieces of voting information that comprises the first voting information and the second voting information is used to request a candidate control node indicated by an identifier comprised in the voting information to replace the master update control node to control the slave update control nodes; and
determining (step 3), by the first candidate control node based on the identifier that is of the candidate control node and that is comprised in the second voting information, the candidate control node that replaces the master update control node to control the slave update control nodes;
wherein the receiving, by the first candidate control node, at least one piece of second voting information comprises:
receiving, by the first candidate control node, the second voting information from a fourth candidate control node, wherein the second voting information comprises an identifier of the fourth candidate control node and information about an available resource of the fourth candidate control node; and
the sending, by a first candidate control node, first voting information comprises:
sending, by the first candidate control node, the first voting information to the fourth candidate control node, wherein an identifier comprised in the first voting information is determined based on a value relationship between a third value and a fourth value, the third value is a value of an available resource of the first candidate control node, and the fourth value is a value of an available resource of the fourth candidate control node.

2. The method according to claim 1, wherein the determining, by the first candidate control node based on the identifier that is of the candidate control node and that is comprised in the second voting information, the candidate control node that replaces the master update control node to control the slave update control nodes comprises: when a quantity of pieces of voting information that comprises an identifier of the first candidate control node in the second voting information is greater than or equal to a first threshold, determining that the first candidate control node replaces the master update control node, wherein the first threshold is determined based on a quantity of candidate control nodes.

3. The method according to claim 2, wherein the method further comprises:
sending, by the first candidate control node, first result information, wherein the first result information comprises the identifier of the first candidate control node, and the first result information is used to indicate that the first candidate control node replaces the master update control node.

4. The method according to any one of claims 1 to 3, wherein the determining, by the first candidate control node based on the identifier that is of the candidate control node and that is comprised in the second voting information, the candidate control node that replaces the master update control node to control the slave update control nodes comprises:
when the first candidate control node receives second result information, determining that the second candidate control node replaces the master update control node, wherein the second result information comprises an identifier of the second candidate control node, the second result information is used to indicate that the second candidate control node replaces the master update control node, and the second result information is sent when a quantity of pieces of voting information that comprises the identifier of the second candidate control node and that is received by the second candidate control node is greater than or equal to the first threshold, wherein the first threshold is determined based on the quantity of candidate control nodes.

5. The method according to any one of claims 1 to 4, wherein the sending, by a first candidate control node, at least one piece of first voting information comprises:
when detecting that the master update control node is faulty, sending, by the first candidate control node, the first voting information to each candidate control node other than the first candidate control node in the at least two candidate control nodes, wherein the first voting information comprises the identifier of the first candidate control node.

6. The method according to claim 5, wherein the method further comprises:
sending, by the first candidate control node, probe information to the master update control node and starting a timer; and
when no response information for the probe information is received before the timer expires, determining that the master update control node is faulty.

7. The method according to any one of claims 1 to 6, wherein the receiving, by the first candidate control node, at least one piece of second voting information comprises:
receiving, by the first candidate control node, the second voting information from a third candidate control node, wherein the second voting information comprises an identifier of the third candidate control node; and
the sending, by a first candidate control node, at least one piece of first voting information comprises:
sending, by the first candidate control node, the first voting information to the third candidate control node, wherein an identifier comprised in the first voting information is determined based on a value relationship between a first value and a second value, the first value is a value corresponding to the identifier of the first candidate control node, and the second value is a value corresponding to the identifier of the third candidate control node.

8. The method according to any one of claims 1 to 7, wherein the first voting information further comprises information about the available resource of the first candidate control node.

9. The method according to any one of claims 1 to 8, wherein the first threshold is greater than or equal to one half of the quantity of candidate control nodes.

10. The method according to any one of claims 1 to 9, wherein the candidate control node is configured in the slave update control node, or the candidate control node is the slave update control node.

11. A software update apparatus, wherein the software update apparatus is configured to perform the method according to any one of claims 1 to 10.

12. An electronic system, comprising:
a plurality of electronic control units ECUs;
a plurality of slave update control nodes, wherein each slave update control node corresponds to at least one ECU, and each slave update control node is configured to control software update of a corresponding ECU;
a master update control node, configured to control the slave update control nodes; and
at least two candidate control nodes, wherein each candidate control node is a software update apparatus according to claim 11.

13. A smart car, comprising the electronic system according to claim 12.

14. A computer-readable storage medium, storing computer programs or instructions, wherein the computer programs or the instructions are used to implement the method according to any one of claims 1 to 10.

## Patentansprüche

1. Verfahren zur Softwareaktualisierung, das auf ein elektronisches System (100) angewendet wird, wobei das elektronische System eine Vielzahl von elektronischen Steuereinheiten ECUs (110), eine Vielzahl von Slave-Aktualisierungssteuerknoten (120), einen Master-Aktualisierungssteuerknoten (130) und mindestens zwei Kandidatensteuerknoten (140) umfasst, wobei jeder der Vielzahl von Slave-Aktualisierungssteuerknoten mindestens einer ECU entspricht, jeder Slave-Aktualisierungssteuerknoten dazu konfiguriert ist, die Softwareaktualisierung einer entsprechenden ECU zu steuern, der Master-Aktualisierungssteuerknoten dazu konfiguriert ist, die Slave-Aktualisierungssteuerknoten zu steuern, und das Verfahren Folgendes umfasst:
Senden (Schritt 1), durch einen ersten Kandidatensteuerknoten, mindestens einer ersten Abstimmungsinformation, wobei jede erste Abstimmungsinformation eine Kennung eines Kandidatensteuerknotens umfasst;
Empfangen (Schritt 2), durch den ersten Kandidatensteuerknoten, mindestens einer zweiten Abstimmungsinformation, wobei jede zweite Abstimmungsinformation eine Kennung eines Kandidatensteuerknotens umfasst, jede einer Vielzahl von Abstimmungsinformationen, die die erste Abstimmungsinformation und die zweite Abstimmungsinformation umfasst, verwendet wird, um einen Kandidatensteuerknoten, der durch eine in der Abstimmungsinformation umfasste Kennung angegeben ist, aufzufordern, den Master-Aktualisierungssteuerknoten zu ersetzen, um die Slave-Aktualisierungssteuerknoten zu steuern; und
Bestimmen (Schritt 3), durch den ersten Kandidatensteuerknoten basierend auf der Kennung, die zu dem Kandidatensteuerknoten gehört und die in den zweiten Abstimmungsinformationen umfasst ist, des Kandidatensteuerknotens, der den Master-Aktualisierungssteuerknoten ersetzt, um die Slave-Aktualisierungssteuerknoten zu steuern;
wobei das Empfangen, durch den ersten Kandidatensteuerknoten, mindestens einer zweiten Abstimmungsinformation Folgendes umfasst:
Empfangen, durch den ersten Kandidatensteuerknoten, der zweiten Abstimmungsinformationen von einem vierten Kandidatensteuerknoten, wobei die zweiten Abstimmungsinformationen eine Kennung des vierten Kandidatensteuerknotens und Informationen über eine verfügbare Ressource des vierten Kandidatensteuerknotens umfassen; und
das Senden, durch einen ersten Kandidatensteuerknoten, von ersten Abstimmungsinformationen Folgendes umfasst:
Senden, durch den ersten Kandidatensteuerknoten, der ersten Abstimmungsinformationen an den vierten Kandidatensteuerknoten, wobei eine in den ersten Abstimmungsinformationen umfasste Kennung basierend auf einer Wertebeziehung zwischen einem dritten Wert und einem vierten Wert bestimmt wird, der dritte Wert ein Wert einer verfügbaren Ressource des ersten Kandidatensteuerknotens ist und der vierte Wert ein Wert einer verfügbaren Ressource des vierten Kandidatensteuerknotens ist.

2. Verfahren nach Anspruch 1, wobei das Bestimmen, durch den ersten Kandidatensteuerknoten basierend auf der Kennung, die zu dem Kandidatensteuerknoten gehört und die in den zweiten Abstimmungsinformationen umfasst ist, des Kandidatensteuerknotens, der den Master-Aktualisierungssteuerknoten ersetzt, um die Slave-Aktualisierungssteuerknoten zu steuern, Folgendes umfasst: wenn eine Menge von Abstimmungsinformationen, die eine Kennung des ersten Kandidatensteuerknotens in den zweiten Abstimmungsinformationen umfassen, größer oder gleich einem ersten Schwellenwert ist, Bestimmen, dass der erste Kandidatensteuerknoten den Master-Aktualisierungssteuerknoten ersetzt, wobei der erste Schwellenwert basierend auf einer Menge von Kandidatensteuerknoten bestimmt wird.

3. Verfahren nach Anspruch 2, wobei das Verfahren ferner Folgendes umfasst:
Senden, durch den ersten Kandidatensteuerknoten, von ersten Ergebnisinformationen, wobei die ersten Ergebnisinformationen die Kennung des ersten Kandidatensteuerknotens umfassen und die ersten Ergebnisinformationen verwendet werden, um anzugeben, dass der erste Kandidatensteuerknoten den Master-Aktualisierungssteuerknoten ersetzt.

4. Verfahren nach einem der Ansprüche 1 bis 3, wobei das Bestimmen, durch den ersten Kandidatensteuerknoten basierend auf der Kennung, die zu dem Kandidatensteuerknoten gehört und die in den zweiten Abstimmungsinformationen umfasst ist, des Kandidatensteuerknotens, der den Master-Aktualisierungssteuerknoten ersetzt, um die Slave-Aktualisierungssteuerknoten zu steuern, Folgendes umfasst:
wenn der erste Kandidatensteuerknoten zweite Ergebnisinformationen empfängt, Bestimmen, dass der zweite Kandidatensteuerknoten den Master-Aktualisierungssteuerknoten ersetzt, wobei die zweiten Ergebnisinformationen eine Kennung des zweiten Kandidatensteuerknotens umfassen, die zweiten Ergebnisinformationen verwendet werden, um anzugeben, dass der zweite Kandidatensteuerknoten den Master-Aktualisierungssteuerknoten ersetzt, und die zweiten Ergebnisinformationen gesendet werden, wenn eine Menge von Abstimmungsinformationen, die die Kennung des zweiten Kandidatensteuerknotens umfassen und die durch den zweiten Kandidatensteuerknoten empfangen werden, größer oder gleich dem ersten Schwellenwert ist, wobei der erste Schwellenwert basierend auf der Menge von Kandidatensteuerknoten bestimmt wird.

5. Verfahren nach einem der Ansprüche 1 bis 4, wobei das Senden, durch einen ersten Kandidatensteuerknoten, von mindestens einer ersten Abstimmungsinformation Folgendes umfasst:
wenn detektiert wird, dass der Master-Aktualisierungssteuerknoten fehlerhaft ist, Senden, durch den ersten Kandidatensteuerknoten, der ersten Abstimmungsinformationen an jeden anderen Kandidatensteuerknoten als den ersten Kandidatensteuerknoten unter den mindestens zwei Kandidatensteuerknoten, wobei die ersten Abstimmungsinformationen die Kennung des ersten Kandidatensteuerknotens umfassen.

6. Verfahren nach Anspruch 5, wobei das Verfahren ferner Folgendes umfasst:
Senden, durch den ersten Kandidatensteuerknoten, von Abtastinformationen an den Master-Aktualisierungssteuerknoten und Starten eines Zeitgebers; und
wenn vor Ablauf des Zeitgebers keine Antwortinformationen für die Abtastinformationen empfangen werden, Bestimmen, dass der Master-Aktualisierungssteuerknoten fehlerhaft ist.

7. Verfahren nach einem der Ansprüche 1 bis 6, wobei das Empfangen, durch den ersten Kandidatensteuerknoten, von mindestens einer zweiten Abstimmungsinformation Folgendes umfasst:
Empfangen, durch den ersten Kandidatensteuerknoten, der zweiten Abstimmungsinformationen von einem dritten Kandidatensteuerknoten, wobei die zweiten Abstimmungsinformationen eine Kennung des dritten Kandidatensteuerknotens umfassen; und
das Senden, durch einen ersten Kandidatensteuerknoten, von mindestens einer ersten Abstimmungsinformation Folgendes umfasst:
Senden, durch den ersten Kandidatensteuerknoten, der ersten Abstimmungsinformationen an den dritten Kandidatensteuerknoten, wobei eine in den ersten Abstimmungsinformationen umfasste Kennung basierend auf einer Wertebeziehung zwischen einem ersten Wert und einem zweiten Wert bestimmt wird, der erste Wert ein Wert ist, der der Kennung des ersten Kandidatensteuerknotens entspricht, und der zweite Wert ein Wert ist, der der Kennung des dritten Kandidatensteuerknotens entspricht.

8. Verfahren nach einem der Ansprüche 1 bis 7, wobei die ersten Abstimmungsinformationen ferner Informationen über die verfügbare Ressource des ersten Kandidatensteuerknotens umfassen.

9. Verfahren nach einem der Ansprüche 1 bis 8, wobei der erste Schwellenwert größer oder gleich einer Hälfte der Menge von Kandidatensteuerknoten ist.

10. Verfahren nach einem der Ansprüche 1 bis 9, wobei der Kandidatensteuerknoten in dem Slave-Aktualisierungssteuerknoten konfiguriert ist oder der Kandidatensteuerknoten der Slave-Aktualisierungssteuerknoten ist.

11. Vorrichtung zur Softwareaktualisierung, wobei die Vorrichtung zur Softwareaktualisierung dazu konfiguriert ist, das Verfahren nach einem der Ansprüche 1 bis 10 durchzuführen.

12. Elektronisches System, umfassend:
eine Vielzahl von elektronischen Steuereinheiten ECUs;
eine Vielzahl von Slave-Aktualisierungssteuerknoten, wobei jeder Slave-Aktualisierungssteuerknoten mindestens einer ECU entspricht und jeder Slave-Aktualisierungssteuerknoten dazu konfiguriert ist, die Softwareaktualisierung einer entsprechenden ECU zu steuern;
einen Master-Aktualisierungssteuerknoten, der dazu konfiguriert ist, die Slave-Aktualisierungssteuerknoten zu steuern; und
mindestens zwei Kandidatensteuerknoten, wobei jeder Kandidatensteuerknoten eine Vorrichtung zur Softwareaktualisierung nach Anspruch 11 ist.

13. Intelligentes Auto, umfassend das elektronische System nach Anspruch 12.

14. Computerlesbares Speichermedium, das Computerprogramme oder Anweisungen speichert, wobei die Computerprogramme oder die Anweisungen verwendet werden, um das Verfahren nach einem der Ansprüche 1 bis 10 umzusetzen.

## Revendications

1. Procédé de mise à jour de logiciel, appliqué à un système électronique (100), dans lequel le système électronique comprend une pluralité d'unités de commande électroniques ECU (110), une pluralité de noeuds de commande de mise à jour esclaves (120), un noeud de commande de mise à jour maître (130), et au moins deux noeuds de commande candidats (140), chacun de la pluralité de noeuds de commande de mise à jour esclaves correspond à au moins une ECU, chaque noeud de commande de mise à jour esclave est configuré pour commander la mise à jour de logiciel d'une ECU correspondante, le noeud de commande de mise à jour maître est configuré pour commander les noeuds de commande de mise à jour esclaves, et le procédé comprend :
l'envoi (étape 1), par un premier noeud de commande candidat, d'au moins une première information de vote, dans lequel chaque première information de vote comprend un identifiant d'un noeud de commande candidat ;
la réception (étape 2), par le premier noeud de commande candidat, d'au moins une seconde information de vote, dans lequel chaque seconde information de vote comprend un identifiant d'un noeud de commande candidat, chacune d'une pluralité d'informations de vote qui comprend des premières informations de vote et des secondes informations de vote est utilisée pour demander à un noeud de commande candidat indiqué par un identifiant compris dans les informations de vote de remplacer le noeud de commande de mise à jour maître pour commander les noeuds de commande de mise à jour esclaves ; et
la détermination (étape 3), par le premier noeud de commande candidat sur la base de l'identifiant qui est du noeud de commande candidat et qui est compris dans les secondes informations de vote, le noeud de commande candidat qui remplace le noeud de commande de mise à jour maître pour commander les noeuds de commande de mise à jour esclaves ;
dans lequel la réception, par le premier noeud de commande candidat, d'au moins une seconde information de vote comprend : la réception, par le premier noeud de commande candidat, des secondes informations de vote provenant d'un quatrième noeud de commande candidat, dans lequel les secondes informations de vote comprennent un identifiant du quatrième noeud de commande candidat et des informations concernant une ressource disponible du quatrième noeud de commande candidat ; et
l'envoi, par un premier noeud de commande candidat, de premières informations de vote comprend :
l'envoi, par le premier noeud de commande candidat, des premières informations de vote au quatrième noeud de commande candidat, dans lequel un identifiant compris dans les premières informations de vote est déterminé sur la base d'une relation de valeur entre une troisième valeur et une quatrième valeur, la troisième valeur est une valeur d'une ressource disponible du premier noeud de commande candidat, et la quatrième valeur est une valeur d'une ressource disponible du quatrième noeud de commande candidat.

2. Procédé selon la revendication 1, dans lequel la détermination, par le premier noeud de commande candidat sur la base de l'identifiant qui est du noeud de commande candidat et qui est compris dans les secondes informations de vote, le noeud de commande candidat qui remplace le noeud de commande de mise à jour maître pour commander les noeuds de commande de mise à jour esclaves comprend : lorsqu'une quantité d'informations de vote qui comprend un identifiant du premier noeud de commande candidat dans les secondes informations de vote est supérieure ou égale à un premier seuil, la détermination du fait que le premier noeud de commande candidat remplace le noeud de commande de mise à jour maître, dans lequel le premier seuil est déterminé sur la base d'une quantité de noeuds de commande candidats.

3. Procédé selon la revendication 2, dans lequel le procédé comprend en outre :
l'envoi, par le premier noeud de commande candidat, de premières informations de résultat, dans lequel les premières informations de résultat comprennent l'identifiant du premier noeud de commande candidat, et les premières informations de résultat sont utilisées pour indiquer que le premier noeud de commande candidat remplace le noeud de commande de mise à jour maître.

4. Procédé selon l'une quelconque des revendications 1 à 3, dans lequel la détermination, par le premier noeud de commande candidat sur la base de l'identifiant qui est du noeud de commande candidat et qui est compris dans les secondes informations de vote, le noeud de commande candidat qui remplace le noeud de commande de mise à jour maître pour commander les noeuds de commande de mise à jour esclaves comprend :
lorsque le premier noeud de commande candidat reçoit des secondes informations de résultat, la détermination du fait que le deuxième noeud de commande candidat remplace le noeud de commande de mise à jour maître, dans lequel les secondes informations de résultat comprennent un identifiant du deuxième noeud de commande candidat, les secondes informations de résultat sont utilisées pour indiquer que le deuxième noeud de commande candidat remplace le noeud de commande de mise à jour maître, et les secondes informations de résultat sont envoyées lorsqu'une quantité d'informations de vote qui comprend l'identifiant du deuxième noeud de commande candidat et qui est reçue par le deuxième noeud de commande candidat est supérieure ou égale au premier seuil, dans lequel le premier seuil est déterminé sur la base de la quantité de noeuds de commande candidats.

5. Procédé selon l'une quelconque des revendications 1 à 4, dans lequel l'envoi, par un premier noeud de commande candidat, d'au moins une première information de vote comprend :
lors de la détection du fait que le noeud de commande de mise à jour maître est défectueux, l'envoi, par le premier noeud de commande candidat, des premières informations de vote à chaque noeud de commande candidat autre que le premier noeud de commande candidat dans les au moins deux noeuds de commande candidats, dans lequel les premières informations de vote comprennent l'identifiant du premier noeud de commande candidat.

6. Procédé selon la revendication 5, dans lequel le procédé comprend en outre :
l'envoi, par le premier noeud de commande candidat, d'informations de sonde au noeud de commande de mise à jour maître et le démarrage d'un temporisateur ; et
lorsqu'aucune information de réponse pour les informations de sonde n'est reçue avant l'expiration du temporisateur, la détermination du fait que le noeud de commande de mise à jour maître est défectueux.

7. Procédé selon l'une quelconque des revendications 1 à 6, dans lequel la réception, par le premier noeud de commande candidat, d'au moins une seconde information de vote comprend :
la réception, par le premier noeud de commande candidat, des secondes informations de vote provenant d'un troisième noeud de commande candidat, dans lequel les secondes informations de vote comprennent un identifiant du troisième noeud de commande candidat ; et
l'envoi, par un premier noeud de commande candidat, d'au moins une première information de vote comprend :
l'envoi, par le premier noeud de commande candidat, des premières informations de vote au troisième noeud de commande candidat, dans lequel un identifiant compris dans les premières informations de vote est déterminé sur la base d'une relation de valeur entre une première valeur et une deuxième valeur, la première valeur est une valeur correspondant à l'identifiant du premier noeud de commande candidat, et la deuxième valeur est une valeur correspondant à l'identifiant du troisième noeud de commande candidat.

8. Procédé selon l'une quelconque des revendications 1 à 7, dans lequel les premières informations de vote comprennent en outre des informations sur la ressource disponible du premier noeud de commande candidat.

9. Procédé selon l'une quelconque des revendications 1 à 8, dans lequel le premier seuil est supérieur ou égal à la moitié de la quantité de noeuds de commande candidats.

10. Procédé selon l'une quelconque des revendications 1 à 9, dans lequel le noeud de commande candidat est configuré dans le noeud de commande de mise à jour esclave, ou le noeud de commande candidat est le noeud de commande de mise à jour esclave.

11. Appareil de mise à jour de logiciel, dans lequel l'appareil de mise à jour de logiciel est configuré pour réaliser le procédé selon l'une quelconque des revendications 1 à 10.

12. Système électronique, comprenant :
une pluralité d'unités de commande électroniques (ECU) ;
une pluralité de noeuds de commande de mise à jour esclaves, dans lequel chaque noeud de commande de mise à jour esclave correspond à au moins une ECU, et chaque noeud de commande de mise à jour esclave est configuré pour commander la mise à jour de logiciel d'une ECU correspondante ;
un noeud de commande de mise à jour maître, configuré pour commander les noeuds de commande de mise à jour esclaves ; et au moins deux noeuds de commande candidats, dans lequel chaque noeud de commande candidat est un appareil de mise à jour de logiciel selon la revendication 11.

13. Voiture intelligente, comprenant le système électronique selon la revendication 12.

14. Support de stockage lisible par ordinateur, stockant des programmes informatiques ou des instructions, dans lequel les programmes informatiques ou les instructions sont utilisés pour mettre en œuvre le procédé selon l'une quelconque des revendications 1 à 10.
